# EUROPEAN PATENT APPLICATION

(11) **EP 4 756 132 A1**
(43) Date of publication of application: **10.06.2026**
(21) Application number: 24871747.2
(22) Date of filing: 02.09.2024
(51) Int. Cl.: E02F 9/20, B60R 16/02, E02F 9/26, G06F 3/14, G06F 3/0482

(54) **WORK MACHINE**

(30) Priority: 27.09.2023 JP 2023166385
(71) Applicant: Hitachi Construction Machinery Co., Ltd., Tokyo 110-0015 (JP)
(72) Inventor: KUROKAMI Kazushige, Tsuchiura-shi, Ibaraki 300-0013 (JP); TOKITA Shigeki, Tsuchiura-shi, Ibaraki 300-0013 (JP); ISHII Takaaki, Tsuchiura-shi, Ibaraki 300-0013 (JP); SAKAMOTO Hiroshi, Tsuchiura-shi, Ibaraki 300-0013 (JP)
(74) Representative: Manitz Finsterwald Patent- und Rechtsanwaltspartnerschaft mbB
(86) International application number: PCT/JP2024/031495
(87) International publication number: WO 2025/069947

(57) **Abstract**

For example, in a work machine equipped with an input device that can selectively assign plurality functions, provide a work machine that can present information indicating the current function assignment without misidentifying the assigned functions and without reducing the visibility of other display information during operation. In a work machine equipped with an input device that can selectively assign any of plurality functions, and a display that shows either a first display screen containing the current function assignment information of the input device or a second display screen that does not contain the current function assignment information of the input device, the controller, when the first display screen is shown on the display and the input device is operated, executes processing according to the current function assignment of the input device. When the second display screen is shown on the display and the input device is operated, it does not execute processing according to the current function assignment of the input device, but instead controls the display to switch the display screen from the second display screen to the first display screen.

## Description

### Technical Field

The present invention relates to a work machine equipped with an input device capable of selectively assigning plurality predetermined functions.

### Background Art

In work machines such as hydraulic excavators, plurality input devices for changing various settings of the work machine, such as engine speed and work mode, are provided around the operator's seat. In recent years, with functional plurality of work machines, the number of these input devices tends to increase.

As the number of input devices increases, the number of components increases, leading to an increase in manufacturing costs. Moreover, the operator needs to find and operate the input device corresponding to the desired function among many input devices, which increases the operator's burden and may lead to a decrease in work efficiency.

To solve such problems, Patent Literature 1 describes an input device that can selectively assign an engine operation function for adjusting engine speed and a screen operation function for operating the screen displayed on the display unit. By consolidating plurality functions into one input device, it is possible to suppress the increase in the number of components.

Furthermore, in the input device of Patent Literature 1, by temporarily or over the period during which a function is assigned, displaying information indicating the function assignment on the display unit allows the operator to recognize the function assigned to the input device.

### Citation List

### Patent Literature

Patent Literature 1: JP 2022-26000 A

### Summary of Invention

### Technical Problem

However, in the input device described in Patent Literature 1, when information indicating the function assignment is displayed temporarily according to the assignment of any function, the operator may not be able to confirm the function assignment at the timing of operating the input device, and may operate it while misrecognizing the assigned function.

On the other hand, when information indicating the function assignment is displayed over the period during which any function is assigned, the display area of the display unit continues to be compressed, which may reduce the visibility of other display information during work and decrease work efficiency.

Therefore, the present invention aims to provide a work machine that, for example, in a work machine equipped with an input device capable of selectively assigning plurality functions, can present information indicating the current function assignment to the operator without misrecognizing the assigned function and without reducing the visibility of other display information during work.

### Solution to Problem

To solve the above problems, the work machine according to the present invention includes: an input device configured to be selectively assigned to a plurality of predetermined functions; a display configured to switch between displaying a first screen including setting information for the functions assigned to the input device and a second screen not including the setting information for the functions; and a controller configured to execute, when the input device receives an operation, a control for performing processing corresponding to the function assigned to the input device and a control for managing the screen displayed on the display. When the first screen is displayed on the display and the input device receives an operation, the controller is configured to execute processing corresponding to the function assigned to the input device, and when the second screen is displayed on the display and the input device receives an operation, the controller is configured to not execute processing corresponding to the function assigned to the input device but switches the screen of the display from the second screen to the first screen.

### Advantageous Effects of Invention

According to the present invention, it is possible to present information indicating the current function assignment to the operator without misrecognizing the assigned function and without reducing the visibility of other display information during work.

### Brief Description of Drawings

FIG. 1 is a diagram showing the appearance of a hydraulic excavator, which is an example of a work machine.
FIG. 2 is a diagram showing the state inside the operator's cabin.
FIG. 3 is a diagram showing the appearance of the jog dial and four push buttons of the input device.
FIG. 4 is a diagram showing the mode transition of the switch.
FIG. 5 is a diagram showing an example of the functions assigned to each switch and their operation guide.
FIG. 6 is a diagram showing an example of the display screen of the touch monitor.
FIG. 7 is a diagram showing an example of the system configuration of the present embodiment.
FIG. 8 is a diagram showing the flow of processing in the operation processing section.
FIG. 9 is a diagram showing the flow of processing in the operation guide display determination section.
FIG. 10 is a diagram showing the flow of processing in the operation guide display determination section.

### Description of Embodiments

Hereinafter, embodiments of the present invention will be described with reference to the drawings, taking as an example the input device in a work machine using the present invention.

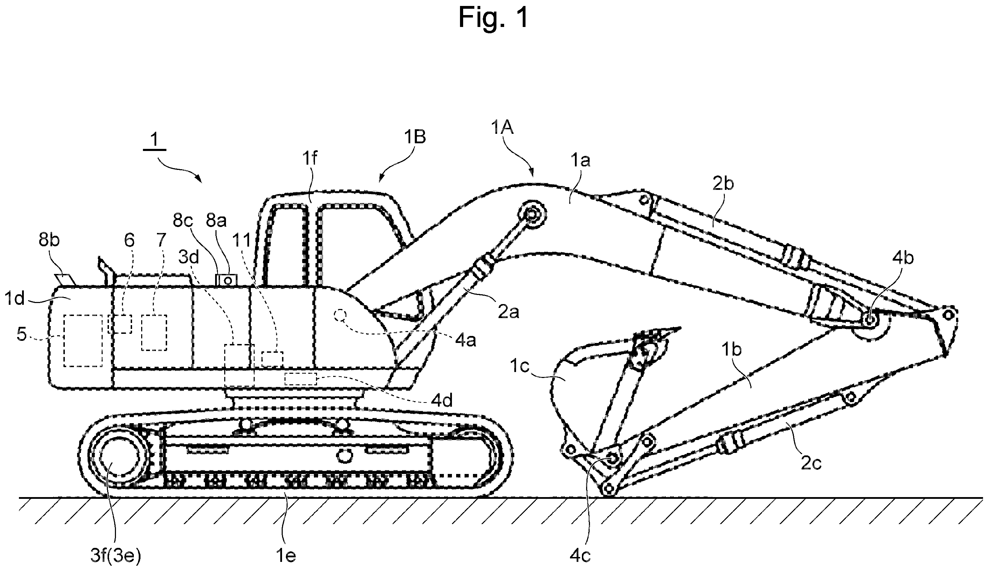

The appearance of a hydraulic excavator 1, which is an example of a work machine, is shown in FIG. 1. The hydraulic excavator 1 is composed of a multi-joint type front work machine 1A consisting of a boom 1a, an arm 1b, and a bucket 1c, each rotating in the vertical direction, and a vehicle body 1B consisting of an upper swing body 1d and a lower travel body 1e. The upper swing body 1d is mounted on the upper part of the lower travel body 1e so as to be able to swing in the left-right direction. In addition, the upper swing body 1d is equipped with an operator's cabin 1f.

The base end of the boom 1a of the front work machine 1A is supported at the front of the upper swing body 1d. The boom 1a, arm 1b, bucket 1c, upper swing body 1d, and lower travel body 1e are each driven by actuators consisting of a boom cylinder 2a, an arm cylinder 2b, a bucket cylinder 2c, a swing motor 3d, and left and right travel motors 3e, 3f. Note that posture sensors 4a, 4b, 4c, 4d are attached to each joint of the front work machine 1A and the joint between the upper swing body 1d and the lower travel body 1e, allowing the angles of each rotating part to be obtained.

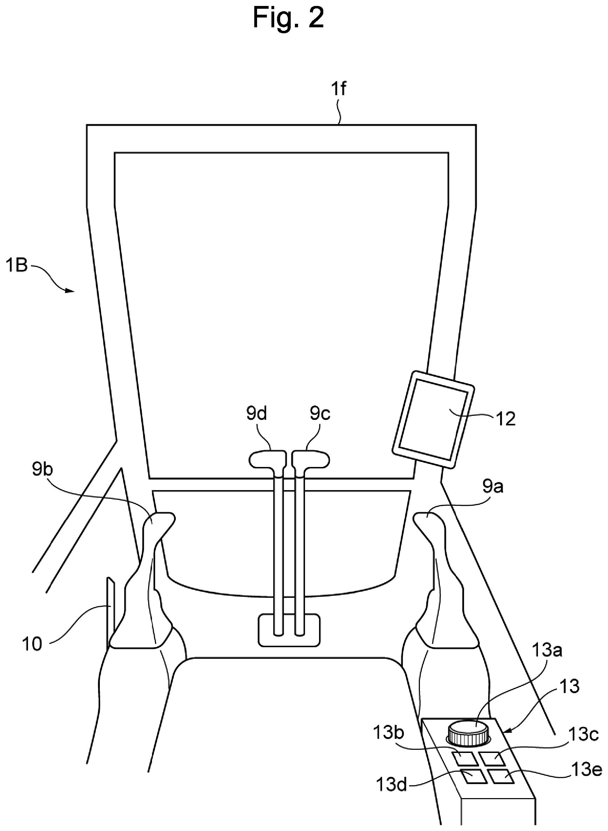

The upper swing body 1d is equipped with an engine 5, a pump 6, an electronic control valve 7, etc., for operating the hydraulic excavator 1, and the pump 6 is driven by the rotation of the engine 5 to discharge hydraulic fluid to each actuator. The electronic control valve 7 controls the operation of each actuator by changing the flow rate and flow direction of the hydraulic fluid in response to operation inputs from the operation levers 9a, 9b, 9c, 9d (see FIG. 2) provided in the operator's cabin 1f. In addition, cameras 8a, 8b, 8c for photographing the surroundings of the hydraulic excavator 1 are installed on the right, rear, and left sides of the upper swing body 1d. Furthermore, the upper swing body 1d is equipped with a controller 11 for controlling the rotation speed of the engine 5 (hereinafter referred to as engine rotation speed).

FIG. 2 is a diagram showing the state inside the operator's cabin 1f. Electric operation levers 9a, 9b, 9c, 9d are installed inside the operator's cabin 1f. Operation levers 9a, 9b can be operated in four directions: forward, backward, left, and right, corresponding to the operation of the front work machine 1A and the upper swing body 1d (boom cylinder 2a, arm cylinder 2b, bucket cylinder 2c, swing motor 3d). Operation levers 9c, 9d can be operated in two directions: forward and backward, corresponding to the operation of the left and right travel motors 3e, 3f attached to the lower travel body 1e. When the shut-off lever 10 provided in the operator's cabin 1f is in the unlocked position, the operation amount of each operation lever is converted into a control command value for each actuator in the controller 11, and the electronic control valve 7 controls the flow rate of the hydraulic fluid to be discharged according to this control command value. In addition, a touch monitor 12 capable of checking and changing various setting states of the hydraulic excavator 1 and displaying camera images taken by cameras 8a, 8b, 8c is installed at the right front of the operator's cabin 1f.

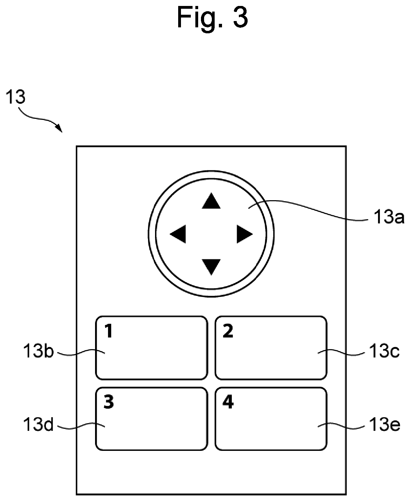

Furthermore, an input device 13 is installed on the right side of the operator's seat in the operator's cabin 1f, allowing various settings related to the hydraulic excavator 1 to be operated. FIG. 3 is a diagram showing the appearance of the input device 13. The input device 13 is composed of a jog dial 13a and four push buttons 13b, 13c, 13d, 13e. The jog dial 13a is a mechanism that allows rotational operation, pressing operation, and sliding operation in the up, down, left, and right directions of the dial part. The push buttons 13b, 13c, 13d, 13e are mechanisms that allow pressing operation of the button part. The input device 13 is managed by plurality modes, and the functions assigned to each switch differ according to the selected mode.

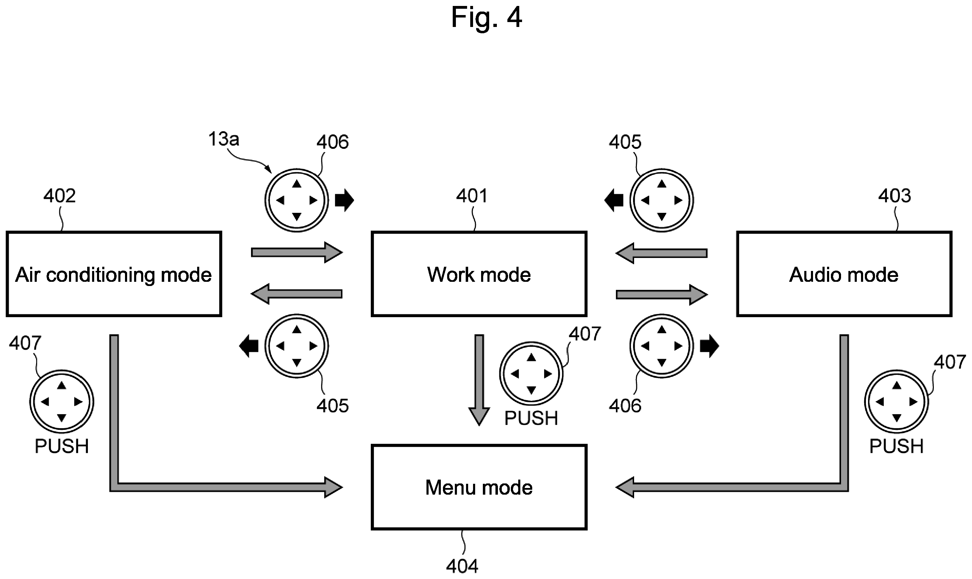

FIG. 4 is a diagram showing the transition method to each mode. In this embodiment, there are four modes: work mode 401, air conditioning mode 402, audio mode 403, and menu mode 404. When the jog dial 13a is slid to the left 405 in the work mode 401 state, it transitions to the air conditioning mode 402, and conversely, when the jog dial 13a is slid to the right 406, it transitions to the audio mode 403. Also, when the jog dial 13a is slid to the right 406 in the air conditioning mode 402 state, or when the jog dial 13a is slid to the left 405 in the audio mode 403 state, it transitions to the work mode 401. Furthermore, when the jog dial 13a is pressed 407 in any of the work mode 401, air conditioning mode 402, or audio mode 403 states, the display screen of the touch monitor 12 transitions to the menu screen, and the input device 13 transitions to the menu mode 404 for screen operation.

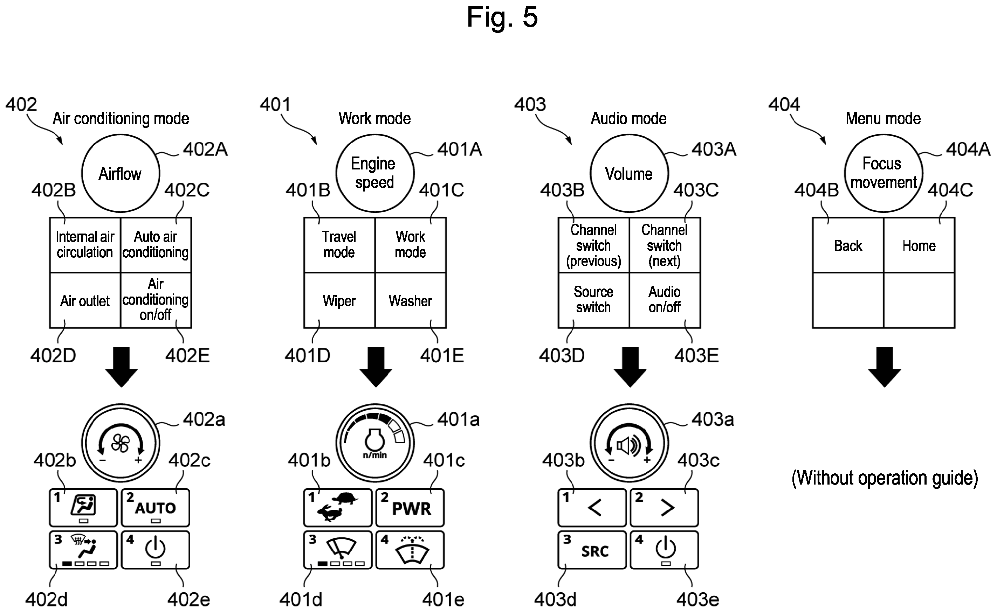

FIG. 5 is a diagram showing an example of the function assignment of the input device 13 in each mode and the display of the operation guide in each mode. The details of the behavior of each switch are shown below.

As shown in the upper diagram of FIG. 5, in the work mode 401 of each function, functions frequently used during the operation of the hydraulic excavator 1, such as engine speed adjustment 401A and wiper operation 401D, are assigned to each switch. Additionally, in air conditioning mode 402, settings related to the air conditioning can be operated, and in audio mode 403, settings related to audio can be operated. In menu mode 404, functions used for screen operations within the menu, such as focus movement 404A and transition to the previous screen 404B, are consolidated.

Furthermore, depending on the currently selected mode, the touch monitor 12 displays the operation guide shown in the lower diagram of FIG. 5. By checking this operation guide, the operator can recognize the functions of each switch and perform the intended operations. Regarding menu mode 404, since the display screen of the touch monitor 12 transitions to the menu screen, the operator can easily identify that the input device 13 has transitioned to menu mode 404, so it may not be necessary to display the operation guide.

Examples of function assignments to each switch of the input device 13 in each mode are described.
work mode 401:
Jog dial 13a (rotation operation): engine speed adjustment (401A, 401a)
Jog dial 13a (press operation): transition to menu screen
Jog dial 13a (slide operation): mode switching of input device 13
Push button 13b: switch the upper limit of travel speed of lower travel body 1e (401B, 401b)
Push button 13c: Switch the upper limit of engine speed (401C, 401c)
Push button 13d: Switch the operation cycle of the wiper (401D, 401d)
Push button 13e: Eject washer fluid (401E, 401e)
air conditioning mode 402:
   Jog dial 13a (rotation operation): adjustment of air volume (402A, 402a)
   Jog dial 13a (press operation): transition to menu screen
   Jog dial 13a (slide operation): mode switching of input device 13
   Push button 13b: switch ON/OFF of internal air circulation (402B, 402b)
   Push button 13c: switch ON/OFF of auto air conditioning (402C, 402c)
   Push button 13d: switch the outlet (402D, 402d)
   Push button 13e: switch ON/OFF of air conditioning power (402E, 402e)
   audio mode 403:
      Jog dial 13a (rotation operation): volume adjustment (403A, 403a)
      Jog dial 13a (press operation): transition to menu screen
      Jog dial 13a (slide operation): mode switching of input device 13
      Push button 13b: switch to the previous channel (403B, 403b)
      Push button 13c: switch to the next channel (403C, 403c)
      Push button 13d: switch the audio source (403D, 403d)
      Push button 13e: switch ON/OFF of audio power (403E, 403E)
      menu mode 404:
         Jog dial 13a (rotation operation): focus movement within the screen (404A)
         Jog dial 13a (press operation): decision
         Jog dial 13a (slide operation): focus movement within the screen (404A)
         Push button 13b: return to the previous screen (404B)
         Push button 13c: return to the basic screen (404C)
         Push button 13d: no assignment
         Push button 13e: no assignment

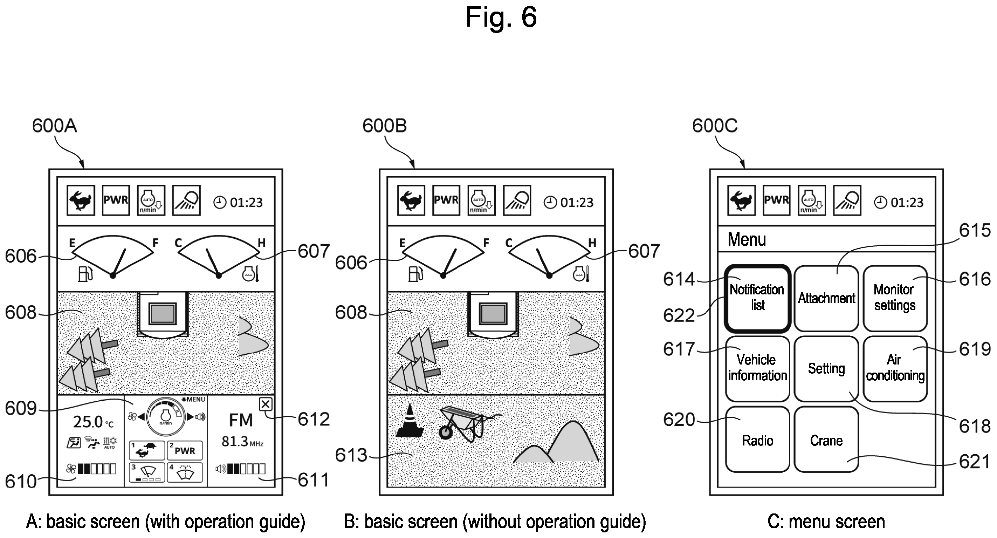

FIG. 6 is a diagram showing an example of a screen displayed on the touch monitor 12. In this embodiment, the display screen of the touch monitor 12 can be classified into three screens: basic screen (with operation guide) 600A, basic screen (without operation guide) 600B, and menu screen 600C, corresponding sequentially to the first display screen, second display screen, and second display screen of the present invention.

The basic screen refers to the screen displayed during the operation of the hydraulic excavator 1, showing frequently checked items such as the fuel gauge 606, water temperature gauge 607, and synthesized overhead images 608 taken by the camera. Additionally, there are basic screen 600A, where operation guide 609 indicating the function assignment of input device 13 is displayed, and basic screen 600B, where operation guide 609 is not displayed.

In the example of FIG. 6, in basic screen 600B where operation guide 609 is not displayed, the rear camera image 613 is displayed in addition to the overhead image 608, and the display area of the camera image shown in basic screen 600B is larger than that shown in basic screen 600A, making it easier to check the surrounding conditions. Thus, when operation guide 609 is not displayed, that area can be utilized to improve the visibility of existing display information or add display information.

One example of a means to transition from basic screen 600A, where operation guide 609 is displayed, to basic screen 600B, where operation guide 609 is not displayed, is the tap operation of the operation guide hide button 612 on basic screen 600A. Additionally, means such as swipe operations of operation guide 609 or setting operations within menu screen 600C can be provided to allow the operator to hide operation guide 609 at any timing (transition to basic screen 600B). In this embodiment, the display presence of operation guide 609 can be linked to switch the display presence of information less frequently checked during operation, such as air conditioning status display 610 (on the left side of operation guide 609) and audio status display 611 (on the right side of operation guide 609).

On the other hand, in menu screen 600C, various settings of the vehicle body can be checked and changed through screen operations. FIG. 6 shows an example of the top menu screen immediately after transitioning to menu screen 600C. During screen operations on this screen, focus 622 can be moved to a predetermined icon among the plurality icons 614-621, and a decision operation by dial pressing can transition to the next hierarchical screen. Thus, within menu screen 600C, jog dial 13a operations and push button 13b, 13c operations, etc., are performed against the screen display to check and change various settings.

Additionally, within menu screen 600C, it may be specified that screen operations can be performed not only by input device 13 but also by touch operations. In this embodiment, all operation guides 609 within menu screen 600C are hidden, but it may be specified that only specific operation guides, such as return to the previous screen/ return to the basic screen operations assigned to push buttons 13b, 13c, are partially displayed.

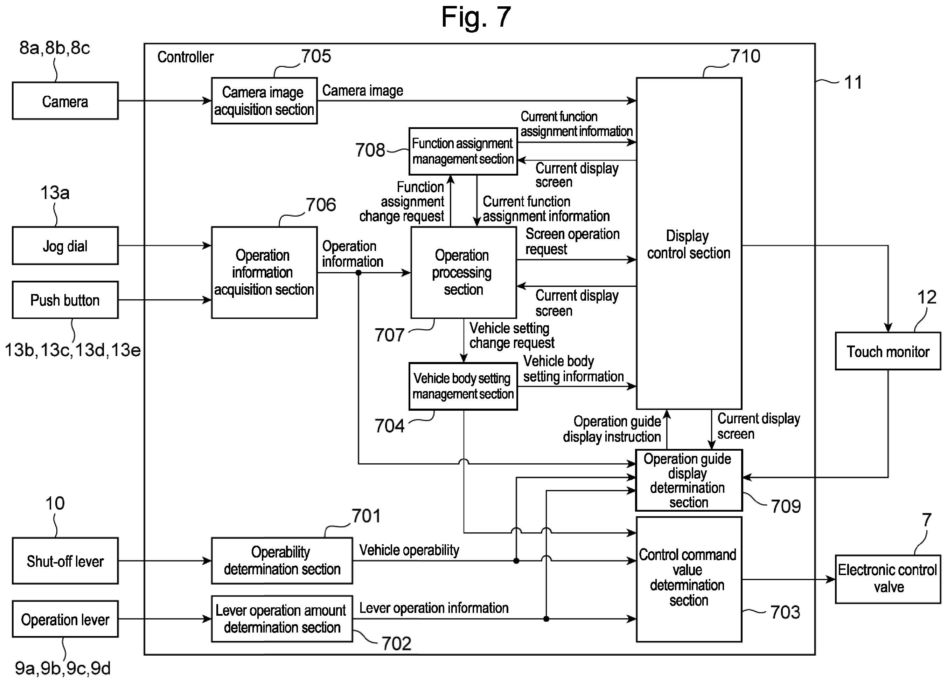

FIG. 7 is a diagram showing the system configuration of this embodiment. Each input/output device is connected to the controller 11, which performs various controls such as input/output of information with the operator and operation commands to the vehicle body. The controller 11 is configured to include processes such as operability determination section 701, lever operation amount determination section 702, control command value determination section 703, vehicle body setting management section 704, camera image acquisition section 705, operation information acquisition section 706, operation processing section 707, function assignment management section 708, operation guide display determination section 709, and display control section 710. Below, the processing flow in each processing unit is described.

The operability determination section 701 detects the position of the shut-off lever 10 and determines the operability of the hydraulic excavator 1. The operability determination section 701 determines the vehicle body operation as unavailable when the shut-off lever 10 is in the lock position, and as available when the shut-off lever 10 is in the unlock position, and outputs the result.

In the lever operation amount determination section 702, the operation amount of each operation lever is determined based on signals from operation levers 9a, 9b, 9c, 9d, and the information is output. The lever operation amount is determined, for example, by setting the neutral position of the operation lever as 0, expressing the operation direction as positive or negative, and the operation amount as 1-100, determining the operation amount of each operation lever within the range of -100 to 100.

In the control command value determination section 703, the control command value for the electronic control valve 7 is determined based on information such as vehicle body operation availability status and lever operation amount. The electronic control valve 7 controls the discharge hydraulic fluid flow rate based on this control command value and drives each actuator.

Additionally, the vehicle body setting management section 704 holds setting values related to the dynamic characteristics of the vehicle body, such as travel mode and work mode, and the control command value determination section 703 determines the control command value based on these vehicle body setting information.

In the camera image acquisition section 705, image signals from cameras 8a, 8b, 8c attached to the upper swing body 1d are acquired, and image correction and synthesis processing are performed as necessary, and output to the display control section 710.

In the operation information acquisition section 706, signals from input device 13 (jog dial 13a and push buttons 13b, 13c, 13d, 13e) are acquired and converted into operation information for each switch. Operation information includes, for example, the rotation direction and rotation amount of jog dial 13a, and the press state of each push button 13b, 13c, 13d, 13e.

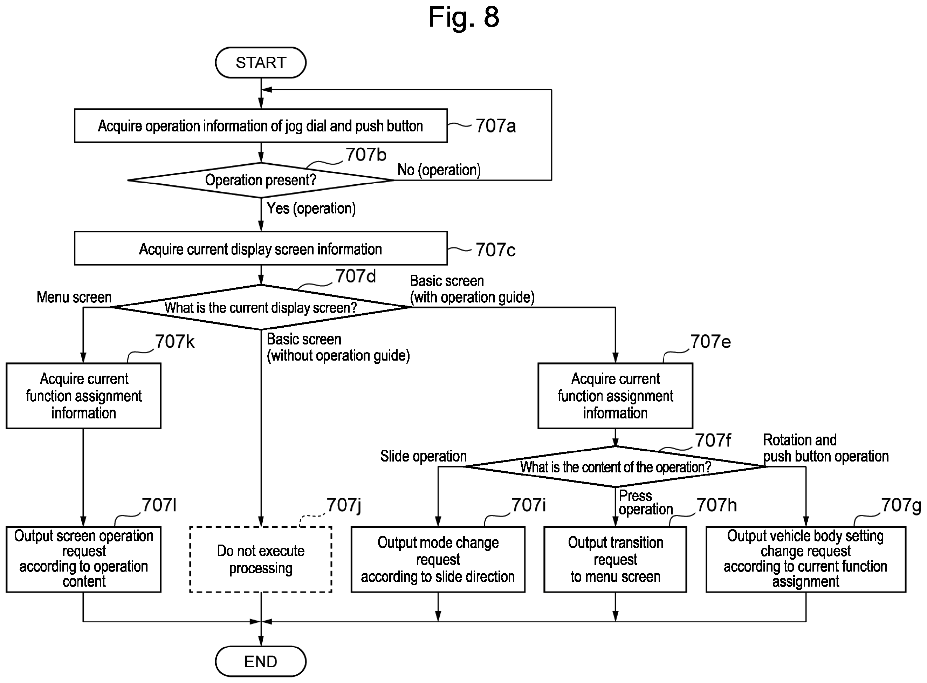

In the operation processing section 707, various processes are carried out using that operation information. FIG. 8 is a diagram showing the processing flow of the operation processing section 707. In the operation processing section 707, first, in step 707a, operation information of jog dial 13a and push buttons 13b, 13c, 13d, 13e is acquired. Next, the process proceeds to step 707b, where a determination is made based on the presence or absence of operations. If there is no operation of any switch, the process returns to step 707a to acquire operation information again.

In step 707b, if there is an operation of the switch, proceed to step 707c and obtain the information of the currently displayed screen from the display control section 710 to the touch monitor 12.

Next, in step 707d, branching processing is performed according to the type of the current display screen.

First, if the current display screen is the basic screen 600A including the operation guide, proceed to step 707e and obtain the current mode of the input device 13 and the function assignment information of each switch from the function assignment management section 708. The function assignment management section 708 retains the assignment information of the switch functions in each mode of the input device 13 and manages the currently selected mode. Next, in step 707f, branching is performed according to the content of the operation. In step 707f, if the operation content is a rotational operation of the jog dial 13a or a pressing operation of the push buttons 13b, 13c, 13d, 13e, in step 707g, the operation content according to the current function assignment is determined, and a request for changing the vehicle body setting is output to the vehicle body setting management section 704.

In step 707f, if the operation content is a pressing operation of the jog dial 13a, proceed to step 707h and output a request for transition to the menu screen 600C to the display control section 710. The process of transitioning to the menu screen 600C is a common function in work mode 401, air conditioning mode 402, and audio mode 403, so the process is executed regardless of the current function assignment.

Also, in step 707f, if the operation content is a slide operation of the jog dial 13a, proceed to step 707i, determine the mode after the change according to the current mode and the slide operation direction, and output the mode change request (function assignment change request) to the function assignment management section 708. The correspondence between the slide operation direction and each mode is as shown in FIG. 4.

In step 707d, if the current display screen is the basic screen 600B that does not include the operation guide 609, proceed to step 707j. If the operation guide 609 is not displayed on the basic screen, it is likely that the operator cannot recognize the functions of each switch. Therefore, in step 707j, the process corresponding to each switch operation (the process according to the current function assignment of each switch) is not executed, and the process of the operation processing section 707 is completed. At this time, in the operation guide display determination section 709 described later, an instruction to display the operation guide 609 on the basic screen is output to the display control section 710, and the process of switching the display screen to the basic screen 600A including the operation guide 609 is executed. After the display screen switches from the basic screen 600B that does not include the operation guide 609 to the basic screen 600A that includes the operation guide 609, by operating the input device 13 again, it is possible to proceed from step 707d to step 707e and execute the process according to the current function assignment of the input device 13.

In the case of functions common to each mode, such as the process of transitioning to the menu screen 600C in step 707h, since the operator is unlikely to misidentify the function assignment, it may be specified that the process can be executed even on the basic screen 600B that does not include the operation guide 609.

Finally, in step 707d, if the current display screen is the menu screen 600C, the operator can easily infer that the input device 13 can be used for screen operation even without the operation guide 609, so the process proceeds in the order of steps 707k and 7071, and executes the screen operation process according to the operation content of the input device 13, such as focus movement and decision. In other words, if the input device 13 is assigned a screen operation function to operate the display screen displayed on the touch monitor 12, the screen operation process according to the current function assignment of the input device 13 is executed for the operation of the input device 13, regardless of whether the display screen of the touch monitor 12 is the basic screen 600A including the operation guide 609 or the basic screen 600B that does not include the operation guide 609.

The processing for each switch operation described here is an example, and the function assignment for each operation can be freely set, such as changing the mode of the input device 13 with the vertical slide operation of the jog dial 13a, or transitioning to the menu screen 600C with the push button 13b.

Next, the processing of the operation guide display determination section 709 will be described. FIG.s 9 and 10 are diagrams showing the flow of processing in the operation guide display determination section 709.

First, in step 709a, the current display screen information is obtained from the display control section 710. Next, in step 709b, branching processing is performed according to the current display screen.

In step 709b, if the current display screen is the basic screen 600B that does not include the operation guide 609, proceed to step 709c and obtain the operation information of the input device 13 from the operation information acquisition section 706. Then, in step 709d, branching processing is performed according to the presence or absence of operation. First, in step 709d, if the input device 13 has not been operated, proceed to step 709e and continue to instruct the display control section 710 to hide the operation guide 609.

On the other hand, in step 709d, if the input device 13 has been operated, proceed to step 709f and instruct the display control section 710 to display the operation guide 609. In this way, if the operation guide 609 is not displayed, the process is performed so that the operation guide 609 is displayed according to any operation of the input device 13 (in other words, if there is any operation of the input device 13, the display screen of the touch monitor 12 is switched from the basic screen 600B that does not include the operation guide 609 to the basic screen 600A that includes the operation guide 609), allowing the operator to confirm the function assignment of each switch without requiring other special operations when attempting to operate the input device 13. Also, if the operation guide 609 is not displayed, the operation processing section 707 does not execute the processing by the operation of the input device 13 (the processing according to the current function assignment of the input device 13) in step 707j, preventing the operator from mistakenly setting the vehicle body with the wrong function assigned to the input device 13.

For functions common to each mode, such as the operation of transitioning to the menu screen 600C, since the operator is unlikely to misidentify the function assignment, it may be specified to keep the operation guide 609 hidden even if there is an operation of the input device 13 in step 709d.

After instructing the display control section 710 to display the operation guide 609 in step 709f, proceed to step 709g and perform the process of resetting the timer of the timer management section 709h. The timer management section 709h counts the time during which the operation guide 609 is displayed and the input device 13 remains in a non-operated state. Therefore, the process of resetting the timer is performed at the timing when the operation guide 609 switches from hidden to displayed, or when the operation of the input device 13 is input.

In step 709b, if the current display screen is the menu screen 600C, as mentioned earlier, the operator can easily infer that the input device 13 can be used for screen operation even without the operation guide 609. Therefore, proceed to step 709e and instruct to hide the operation guide 609.

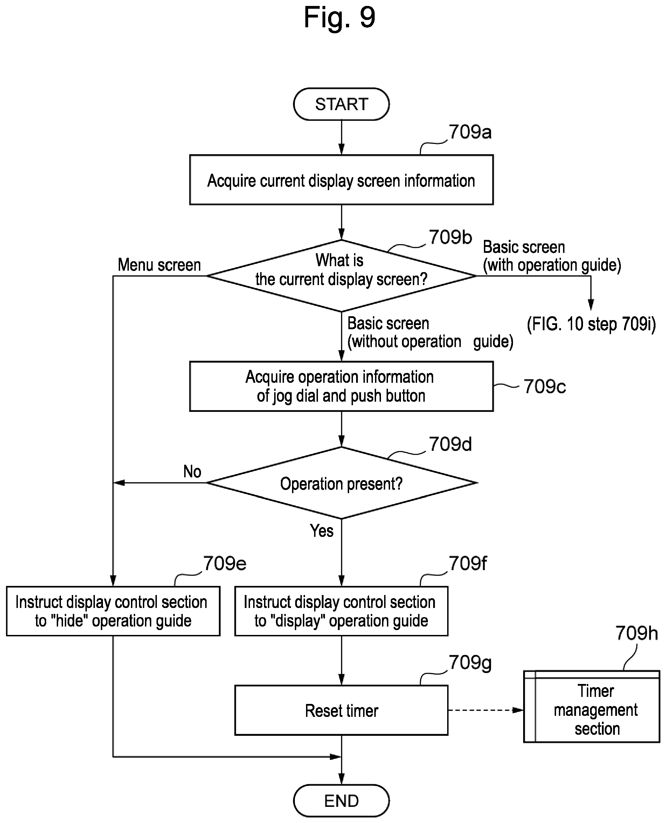

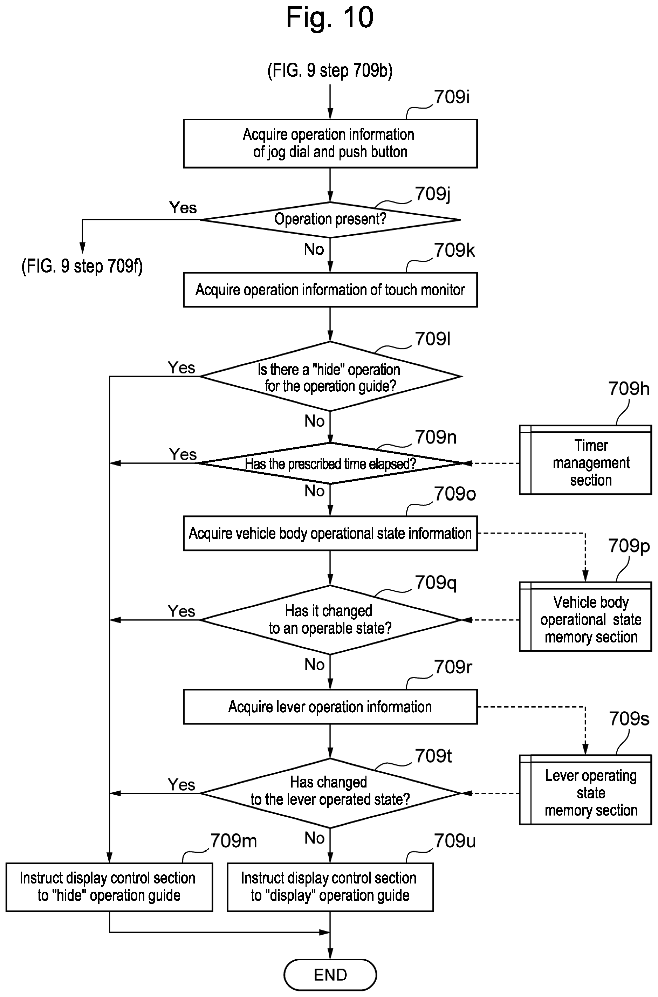

In step 709b, if the current display screen is the basic screen 600A that includes the operation guide 609, proceed to step 709i in Figure 10. In step 709i, operation information is obtained from the operation information acquisition section 706 for the input device 13, and further, in step 709j, branching processing is performed according to the presence or absence of operation. In step 709j, if there is an operation of the input device 13, proceed to steps 709f and 709g in Figure 9, and execute the instruction to continue displaying the operation guide 609 and the process to reset the timer of the timer management section 709h.

In step 709j, if there is no operation of the input device 13, proceed to step 709k and obtain the touch operation information of the touch monitor 12. Then, in step 7091, it is determined whether the operation guide 609 has been hidden, that is, whether the tap operation of the operation guide hide button 612 on the basic screen 600A has been performed. If the tap operation of the operation guide hide button 612 on the basic screen 600A is performed, it indicates that the operator has determined that the operation guide 609 is unnecessary, so proceed to step 709m and output the instruction to hide the operation guide 609.

In step 7091, if the operation guide 609 has not been hidden, in step 709n, it is determined whether the timer of the timer management section 709h has exceeded a predetermined time. In step 709n, if the predetermined time has elapsed, proceed to step 709m and output the instruction to hide the operation guide 609. If the operation guide 609 is displayed and the input device 13 has not been operated for a predetermined time (if the input device 13 has not been operated for a certain period), it can be determined that the operator has no intention to operate the input device 13. In such cases, by automatically hiding the operation guide 609 (switching the display screen of the touch monitor 12 from the basic screen 600A including the operation guide 609 to the basic screen 600B not including the operation guide 609), the operator does not need to operate the operation guide hide button 612 on the basic screen 600A, thus enabling efficient work.

In step 709n, if the timer of the timer management section 709h has not reached a predetermined time, the process proceeds to step 709o, where the operational state of the vehicle body is obtained and stored in the vehicle body operational state memory section 709p. The vehicle body operational state memory section 709p retains the current operational state and the operational state at the time of the previous processing cycle. In step 709q, it determines whether the vehicle body has transitioned from a non-operable state to an operable state by comparing each state. In step 709q, if the vehicle body has transitioned from a non-operable state to an operable state, an instruction to hide the operation guide 609 is output in step 709m. At this time, it can be determined that the operator has moved the shut-off lever 10 to the unlock position and intends to start operating the hydraulic excavator 1, so the process of automatically hiding the operation guide 609 is performed (by switching the display screen of the touch monitor 12 from the basic screen 600A including the operation guide 609 to the basic screen 600B not including the operation guide 609), thereby eliminating the need for the operator to operate the operation guide hide button 612 on the basic screen 600A, allowing for more efficient work.

In step 709q, if there is no change in the operability state of the vehicle body, the process proceeds to step 709r to obtain the operating state of the control lever. In steps 709r, 709t, and the lever operating state memory section 709s, similar to the above process, it is determined whether the control lever has transitioned from a non-operated state to an operated state, and if the control lever has transitioned from a non-operated state to an operated state, an instruction to hide the operation guide 609 is output in step 709m. On the other hand, in step 709t, if there is no change in the lever operating state, the process proceeds to step 709u, where an instruction to continue displaying the operation guide 609 is output.

In this embodiment, the process of hiding the operation guide 609 based on the operational state of the vehicle body and the lever operating state is described. Conversely, when the vehicle body transitions to a non-operable state or a certain time has elapsed after the control lever transitions to a non-operated state, that is, when it is likely that the operator will operate the input device 13, it may be processed to display the operation guide 609. By adding such processing, the operator can operate the input device 13 once, eliminating the need to display the operation guide 609, thereby enabling more efficient setting operations using the input device 13.

The display control section 710 generates a display screen based on various vehicle body settings, function assignments of the input device 13, and information such as display instructions for the operation guide 609, and outputs it to the touch monitor 12.

Thus, in this embodiment, based on the operating state of the input device 13 and various vehicle body states, it is determined whether the operator is in a situation where the operation guide 609 is needed, and the operation guide 609 is displayed on the touch monitor 12 as necessary.

Also, if the operation guide 609 is not displayed on the touch monitor 12, processing by the operation of the input device 13 is not performed, so it is possible to present the function assignment information of the input device 13 to the operator without operating under the misapprehension of the assigned function and without reducing the visibility of other display information during work.

### [Summary]

As described above, the work machine (hydraulic excavator 1) of this embodiment includes an input device 13 (jog dial 13a and push buttons 13b, 13c, 13d, 13e) capable of selectively assigning plurality predetermined functions (including a function to adjust the rotation speed of a prime mover (engine, motor, etc.) driving the work machine), a display (touch monitor 12) that switches between a first display screen including the setting information (operation guide 609) of the function assigned to the input device 13 and a second display screen not including the setting information (operation guide 609) of the function assigned to the input device 13, a controller 11 that acquires operation information of the input device 13 (operation information acquisition section 706), manages the function assignment of the input device 13 (function assignment management section 708), executes control (operation processing section 707) to perform processing according to the function assigned to the input device 13 when the input device 13 accepts an operation, and executes control (display control section 710) to control the display screen displayed on the display, wherein the controller 11, when the first display screen is displayed on the display (touch monitor 12), executes processing according to the function assigned to the input device 13 when the input device 13 accepts an operation, and when the second display screen is displayed on the display (touch monitor 12), controls to switch the display screen of the display (touch monitor 12) from the second display screen to the first display screen without executing processing according to the function assigned to the input device 13.

Also, the work machine (hydraulic excavator 1) has a switching unit that selectively switches the display screen of the display between the first display screen and the second display screen (by operator operation).

Also, the controller 11 controls to switch the display screen of the display from the first display screen to the second display screen when a certain time has elapsed without the input device 13 being operated.

Also, the controller 11 determines the operational state of the work machine (operability determination section 701) and controls to switch the display screen of the display from the first display screen to the second display screen when the work machine transitions from a non-operable state to an operable state.

Also, the controller 11 determines the operating state of the work machine (lever operation amount determination section 702) and controls to switch the display screen of the display from the first display screen to the second display screen when the work machine transitions from a non-operated state to an operated state.

Also, the work machine (hydraulic excavator 1) is equipped with cameras 8a, 8b, 8c for capturing the surroundings of the work machine, and the first display screen and the second display screen display camera images captured by the cameras 8a, 8b, 8c, with the display area of the camera images displayed on the second display screen being larger than the display area of the camera images displayed on the first display screen.

Also, the input device 13 is composed of plurality operation units (jog dial 13a and push buttons 13b, 13c, 13d, 13e) each capable of being assigned the predetermined functions, and the controller 11, when the second display screen is displayed on the display, switches the display screen of the display from the second display screen to the first display screen when any specific operation unit among the plurality operation units accepts an operation, and the first display screen includes the setting information of the function assigned to the specific operation unit along with the setting information of the functions assigned to operation units other than the specific operation unit among the plurality operation units.

Also, the controller 11, when the input device 13 is assigned a screen operation function to operate the display screen displayed on the display, executes screen operation processing according to the current function assignment of the input device 13 in response to the operation of the input device 13, regardless of whether the display screen of the display is the first display screen or the second display screen.

Also, the input device 13 accepts an operation to switch the function assigned to the input device 13 and an operation to execute processing according to the function assigned to the input device 13.

Also, the plurality predetermined functions assignable to the input device 13 include a function to adjust the rotation speed of the prime mover (engine, motor, etc.) driving the work machine, a function to adjust the audio volume in the operating room of the work machine, and a function to adjust the air conditioning airflow in the operating room of the work machine.

The input device 13 according to this embodiment has a first display screen including the current function assignment information (operation guide 609) of the input device 13 and a second display screen not including the current function assignment information (operation guide 609) of the input device 13, and while the second display screen is displayed, it executes processing to transition to the first display screen in response to the operation of the input device 13, regardless of the current function assignment. By executing such processing, the operator can confirm the first display screen including the current function assignment information before performing various setting operations, making it possible to operate without misapprehending the currently assigned functions. Also, until the operator operates the input device 13, the second display screen not including the function assignment information is displayed, allowing work to be performed without impairing the visibility of other display information.

Also, by providing means (switching unit) to selectively transition from the first display screen to the second display screen, the second display screen can be displayed at any timing when the operator no longer needs the current function assignment information, improving the visibility of high-priority display information during work and enabling efficient work.

Furthermore, if the input device 13 has not been operated for a certain period of time, control is exercised to display the second display screen. This allows the operator to automatically switch to the second display screen when it is determined that the operation of the input device 13 is complete and the current function assignment information is no longer needed. As a result, the operator can avoid the hassle of manually switching to the second display screen, thereby improving work efficiency.

Furthermore, by determining the operating state of the work machine and controlling it to display the second display screen when the work machine transitions from a non-operated state to an operated state, it is possible to automatically display the second display screen when the operator starts operating the work machine, that is, when the situation transitions to one where the operation of the input device 13 is less likely. This improves the visibility of display information other than the current function assignment information, enabling efficient work.

Furthermore, by determining the operational status of the work machine and controlling it to display the second display screen when the work machine transitions from an inoperable state to an operable state, it is possible to automatically display the second display screen when the operator is about to start operating the work machine, that is, when the situation transitions to one where the likelihood of operating the input device 13 is low, thereby improving the visibility of display information other than the current function assignment information and enabling efficient work.

Furthermore, by enlarging the display area of the camera image on the second display screen compared to the display area on the first display screen, it becomes easier to visually recognize the surroundings of the work machine on the second display screen, which does not include the current function assignment information, thereby enabling efficient work.

In addition, when the input device 13 is composed of plurality operation units (jog dial 13a and push buttons 13b, 13c, 13d, 13e), if there is an operation on any one of the operation units, it is controlled to display the first display screen that includes function assignment information of operation units different from the operated one. This eliminates the need to switch function assignment information for each operation of the operation units, thereby reducing the number of operations of the input device 13 when operating plurality operation units consecutively, and enabling efficient operation of the input device.

Additionally, when the screen operation function for operating the display screen shown on the display (touch monitor 12) is assigned to the input device 13, even if the function assignment information is not directly displayed, the operator can infer from the display content of the screen that the current function assignment is the screen operation function. Therefore, if the input device 13 is assigned screen operation functions, it is possible to efficiently perform screen operations by enabling the processing of screen operations regardless of whether the function assignment information is displayed.

As described above, according to this embodiment, it is possible to present information indicating the current function assignment to the operator without misidentifying the assigned functions and without reducing the visibility of other display information during operation.

This embodiment has described the operation using the present invention with a hydraulic excavator as an example, but the present invention is not limited to the above-described embodiment, and various modifications are possible. For example, the present invention is not limited to including all the components described in the above embodiment, but also includes those with some components removed.

Additionally, the various components related to the aforementioned controller 11, as well as the functions and execution processes of these components, may be implemented in hardware, such as designing the logic for executing each function in an integrated circuit, either partially or entirely. Additionally, the configuration related to the above-mentioned controller 11 may also be a program (software) in which each function related to the configuration of the controller is realized by being read and executed by a processing device (such as a CPU). Information related to the program can be stored, for example, in semiconductor memory (such as flash memory, SSDs), magnetic storage devices (such as hard disk drives), and recording media (such as magnetic disks, optical disks).

In the description of the above embodiment, the control lines and information lines shown are those deemed necessary for the explanation of the embodiment, but do not necessarily represent all the control lines and information lines related to the product. In reality, it can be considered that almost all configurations are interconnected.

### Reference Signs List

1: Hydraulic excavator (work machine), 1A: Front work machine, 1B: Vehicle body, 1a: Boom, 1b: Arm, 1c: Bucket, 1d: Upper swing body, 1e: Lower travel body, 1f: Operator's cabin, 4a,4b,4c,4d: Posture sensor, 5: Engine (prime mover), 6: Pump, 7: Electronic control valve, 8a,8b,8c: Camera, 9a,9b,9c,9d: Operation lever (operating device), 10: Shut-off lever, 11: Controller, 12: Touch monitor (display), 13: Input device, 13a: Jog dial, 13b,13c,13d,13e: Push button, 401: Work mode, 402: Air conditioning mode, 403: Audio mode, 404: Menu mode, 600A: Basic screen (with operation guide) (first display screen), 600B: Basic screen (without operation guide) (second display screen), 600C: Menu screen (second display screen), 609: Operation guide, 701: Operability determination section, 702: Lever operation amount determination section, 703: Control command value determination section, 704: Vehicle body setting management section, 705: Camera image acquisition section, 706: Operation information acquisition section, 707: Operation processing section, 708: Function assignment management section, 709: Operation guide display determination section, 710: Display control section

## Claims

1. A work machine comprising:
an input device configured to be selectively assigned to a plurality of predetermined functions;
a display configured to switch between displaying a first screen including setting information for the functions assigned to the input device and a second screen not including the setting information for the functions; and
a controller configured to execute, when the input device receives an operation, a control for performing processing corresponding to the function assigned to the input device and a control for managing the screen displayed on the display,
wherein when the first screen is displayed on the display and the input device receives an operation, the controller is configured to execute processing corresponding to the function assigned to the input device, and
when the second screen is displayed on the display and the input device receives an operation, the controller is configured to not execute processing corresponding to the function assigned to the input device but switches the screen of the display from the second screen to the first screen.

2. The work machine according to claim 1,
wherein the plurality of predetermined functions assignable to the input device include a function for adjusting a rotational speed of a prime mover driving the work machine.

3. The work machine according to claim 1,
further comprising a switching section configured to selectively switch displaying the screen on the display between the first screen and the second screen.

4. The work machine according to claim 1,
wherein the controller is configured to switch displaying on the display from the first screen to the second screen when a state in which the input device is not operated continues for a predetermined period of time.

5. The work machine according to claim 1,
wherein the controller is configured to determine an operational state of the work machine,
and when the work machine transitions from a non-operable state to an operable state,
configured to control the display to switch the screen displayed on the display from the first screen to the second screen.

6. The work machine according to claim 1,
wherein the controller is configured to determine an operating state of the work machine,
and when the work machine transitions from a non-operated state to an operated state,
configured to control the display to switch the screen displayed on the display from the first screen to the second screen.

7. The work machine according to claim 1,
further comprising a camera configured to capture surroundings of the work machine,
wherein both the first screen and the second screen display an image captured by the camera,
and a display area of the camera image shown on the second screen is larger than a display area of the camera image shown on the first screen.

8. The work machine according to claim 1,
wherein the input device includes a plurality of operation units, each of which can be assigned to the predetermined functions,
the controller is configured to switch displaying screen of the display from the second screen to the first screen when specific operation unit of the plurality of operation units receives an operation while the second display screen is being displayed on the display, and
the first display screen includes the setting information of the function assigned to the specific operation unit, along with the setting information of the functions assigned to operation units other than the specific operation unit among the plurality of operation units.

9. The work machine according to claim 1,
wherein the controller is configured to execute, when the input device is assigned to a screen operation function for operating a screen displayed on the display, and when the input device receives an operation, a screen operation processing regardless of whether the screen displayed on the display is the first screen or the second screen.

10. The work machine according to claim 2,
wherein the input device is configured to receive an operation for switching a function assigned to the input device,
and an operation for executing a process corresponding to the function assigned to the input device.

11. The work machine according to claim 1,
wherein the plurality of predetermined functions assignable to the input device include a function for adjusting a rotational speed of a prime mover that drives the work machine, a function for adjusting a volume of audio in an operator's cabin of the work machine, and a function for adjusting an air flow rate of an air conditioning in the operator's cabin of the work machine.
